# EUROPÄISCHE PATENTSCHRIFT

(11) **EP 3 405 375 B1**
(45) Veröffentlichungstag und Bekanntmachung des Hinweises auf die Patenterteilung: **21.06.2023**
(21) Anmeldenummer: 16812934.4
(22) Anmeldetag: 14.12.2016
(51) Int. Cl.: B60W 40/08

(54) **VERFAHREN ZUR KLASSIFIKATION VON FAHRERBEWEGUNGEN**
METHOD FOR CLASSIFYING DRIVER MOVEMENTS
PROCÉDÉ DE CLASSIFICATION DE COMPORTEMENTS DE CONDUCTEUR

(30) Priorität: 21.01.2016 DE 102016200856; 17.08.2016 DE 102016215291
(43) Veröffentlichungstag der Anmeldung: 28.11.2018
(73) Patentinhaber: Robert Bosch GmbH, 70442 Stuttgart (DE)
(72) Erfinder: KORTHAUER, Andreas, 70499 Stuttgart (DE); KRAUTTER, Wolfgang, 71229 Leonberg (DE); BIEG, Hans-Joachim, 71093 Weil Im Schoenbuch (DE); FISCHER, Jonathan, 74613 Oehringen (DE)
(86) Internationale Anmeldenummer: PCT/EP2016/080972
(87) Internationale Veröffentlichungsnummer: WO 2017/125211

(56) Entgegenhaltungen:
- DE-A1-102005 021 141
- DE-A1-102012 021 249
- DE-A1-102013 000 131
- DE-A1-102013 013 227
- DE-A1-102013 210 941
- DE-A1-102014 201 282
- DE-A1-102014 213 285

## Beschreibung

Die vorliegende Erfindung betrifft ein Verfahren zur Klassifikation von Fahrerbewegungen zur Ermittlung der Fahreraufmerksamkeit bei der Führung eines Kraftfahrzeugs mit einer Innenraumkamera zur Aufnahme wenigstens eines Teils des Fahrers, wobei basierend auf der Aufnahme eine, eine Kopfbewegung des Fahrers repräsentierende, Bewegungsgröße ausgewertet wird, und eine Fahrerbewegung als ein Sicherheitsblick klassifiziert wird, wenn die Bewegungsgröße einer definierten Bedingung entpricht. Weiterhin betrifft die Erfindung eine Vorrichtung und ein Computerprogramm, welche eingerichtet sind, das Verfahren auszuführen.

### Stand der Technik

Aus dem Stand der Technik ist beispielsweise die Patentanmeldung DE 10 2013 210 941 A1 bekannt. Diese Schrift betrifft ein betrifft ein Verfahren zum Betreiben eines Fahrzeugs, wobei eine Fahrzeugführung eines Fahrers des Fahrzeugs überwacht wird, so dass basierend auf der überwachten Fahrzeugführung einen Fahrstil des Fahrers beschreibende Fahrparameter gebildet werden, welche einem Fahrerassistenzsystem des Fahrzeugs bereitgestellt werden, so dass bei einer Steuerung des Fahrzeugs mittels des Fahrerassistenzsystems der Fahrstil des Fahrers zumindest teilweise abgebildet wird. Hierbei wird bspw. die Überwachung der Fahrzeugführung des Fahrers mittels zumindest eines Sensors durchgeführt werden kann. Basierend auf den entsprechenden Messdaten der Sensoren können die Fahrparameter gebildet werden. Beispielsweise kann mittels einer Innenraumkamera umfassend einen Videosensor überprüft werden, ob der Fahrer, beispielsweise bei einer Spurwechselabsicht oder einem Abbiegevorgang, regelmäßig einen Schulterblick durchführt.

Weiterhin ist aus dem Stand der Technik die Patentanmeldung DE 10 2009 005 730 bekannt. Diese Schrift betrifft ein Verfahren zur Überwachung der Aufmerksamkeit eines Fahrzeugführers eines Kraftfahrzeuges mit folgenden Schritten: Ermitteln einer Ist-Blickrichtung, d. h. der Richtung, in welche der Fahrzeugführer blickt, Ermitteln einer Soll-Blickrichtung, d. h. der Richtung, in welche der Fahrzeugführer blicken sollte, um das Kraftfahrzeug sicher zu führen, Bewerten der Ist-Blickrichtung anhand der Soll-Blickrichtung zum Feststellen der Aufmerksamkeit oder Unaufmerksamkeit des Kraftfahrzeugführers, Ermitteln einer Zeitvorgabe, innerhalb derer eine Unaufmerksamkeit des Kraftfahrzeugführers tolerierbar ist, bei Feststellen einer Unaufmerksamkeit des Kraftfahrzeugführers Erfassen der Zeitdauer der Unaufmerksamkeit und Vergleichen mit der Zeitvorgabe, Alarmieren des Fahrzeugführers bei Überschreiten der Zeitdauer, wobei das Verfahren dadurch gekennzeichnet ist, dass die Soll-Blickrichtung und/oder die Zeitvorgabe in Abhängigkeit von einer Stellung eines Fahrtrichtungsanzeigers, von Informationen über einen vor dem Kraftfahrzeug liegenden Straßenverlauf und/oder von Informationen eines Spurhalteassistenten ermittelt werden.

Eine Abschätzung der Blickrichtung des Fahrers ist weiterhin im Allgemeinen nützlich, um bspw. zu überprüfen, ob der Fahrer auf die Fahrbahn vor ihm sieht und die vorliegende Verkehrssituation beachtet. Fahrsicherheitssysteme und Fahrerassistenzfunktionen können von diesen Informationen profitieren, bspw. indem sie Warnstufen in Abhängigkeit der Aufmerksamkeit anpassen. Verfahren um die Aufmerksamkeit des Fahrers hinsichtlich der Verkehrssituation zu überprüfen, verwenden meist (A) ein Beobachtungssystem, welches es ermöglicht die Kopforientierung des Fahrers und/oder die Blickrichtung des Fahrers abzuschätzen und (B) eine Vergleich der Kopforientierung und/oder Blickrichtung mit einer zu betrachtenden Ebene des Verkehrsgeschehens (Region of Interest ROI oder Area of Interest AOI). Eine Ablenkung oder Unaufmerksamkeit wird dann angenommen, wenn bspw. eine Abweichung zwischen der Kopforientierung/Blickrichtung und der definierten ROI erkannt wird. Diese Ansatz führt jedoch zu Schwierigkeiten, wenn der Fahrer ein Fahrverhalten zeigt, welches zwar eine Aufmerksamkeit darstellt, jedoch auch dazu führt, dass der Fahrer seine Kopforientierung/Blickrichtung von der ROI entfernt, wie bspw. bei einem Schulterblick oder einem Blick in den Seitenspiegel.

Weiterhin ist aus dem Stand der Technik die DE10 2005 021 141 A1 bekannt. Diese Schrift bezieht sich auf ein Verfahren zum Vermeiden von Personen- und Sachschäden beim Öffnen von Kraftfahrzeugtüren mittels eines Warnsystems.

Weiterhin ist die DE 10 2013 013 227 A1 bekannt. Diese Schrift betrifft einen Kraftwagen mit einer Anzeigeeinheit sowie Überwachungseinrichtung, welche zum Überwachen einer aktuellen Körperhaltung des Fahrers und zum Unterbrechen des Anzeigens des Anzeigeinhalts für den Fall ausgelegt ist, dass der Fahrer versucht, die Anzeigeeinheit aus dem Raumbereich zu betrachten.

Weiterhin ist die DE 10 2014 201 282 A1 bekannt. Diese Schrift betritt ein Verfahren für ein Fahrerassistenzsystem wobei in einem Schritt überwacht wird, ob der Fahrer die gegenwärtige Verkehrssituation überblickt und beispielsweise einen sogenannten Schulterblick getätigt hat, d. h., ob der Fahrer durch Drehen des Kopfes den seitlichen Rückraum des Fahrzeugs auf andere Fahrzeuge hin überprüft.

Weiterhin ist die DE 10 2013 000 131 A1 bekannt. Diese Schrift betrifft ein Feedbacksystem. Beispielsweise kann durch eine Kamera erkannt werden, wenn der Fahrer einen Schulterblick vor einem Abbiegen oder Fahrbahnwechsel durchführt.

Weiterhin ist die DE 10 2012 021 249 A1 bekannt. Diese Schrift betrifft ein Verfahren zum Absichern eines Ausstiegsvorgangs einer Person aus einem Fahrzeug. Eine Ausführungsform des Verfahrens sieht vor, dass hierzu als zumindest ein Teil der Überwachungseinrichtung ein Spurwechselassistent verwendet wird.

### Offenbarung der Erfindung

Vorteilhaft ermöglicht hingegen das erfindungsgemäße Verfahren das Risiko von Fehlinterpretationen von Fahrerbewegungen zu reduzieren und die Zuverlässigkeit des Systems zu optimieren. Ermöglicht wird dies gemäß der Erfindung durch die Merkmale der unabhängigen Patentansprüche. Weiterbildungen der Erfindung sind in den abhängigen Patentansprüchen angegeben.

Das erfindungsgemäße Verfahren zur Klassifikation von Fahrerbewegungen zur Ermittlung der Fahreraufmerksamkeit bei der Führung eines Kraftfahrzeugs mit einer Innenraumkamera zur Aufnahme wenigstens eines Teils des Fahrers, ist dadurch gekennzeichnet, dass basierend auf der Aufnahme eine, eine Kopfbewegung des Fahrers repräsentierende, Bewegungsgröße ausgewertet wird, und eine Fahrerbewegung als ein Sicherheitsblick klassifiziert wird, wenn die Bewegungsgröße einer definierten Bedingung entspricht.

Hierunter wird verstanden, dass eine Bewegung des Fahrers als Sicherheitsblick angesehen wird, wenn diese ein oder mehrere bestimmte Erfordernisse erfüllt. Als Erfordernis kann definiert sein, dass ein Bewegungsaspekt einem definierten Schwellenwert entspricht oder diesen überschreitet oder unterschreitet. Alternative können auch Grenzwerte als Erfordernisse definiert werden. Darüber hinaus kann definiert werden, dass ein bestimmter Aspekt innerhalb eines definierten Zeitintervalls zu erfolgen hat, dass eine Bedingung als erfüllt angesehen wird. Als Sicherheitsblick werden dabei insbesondere verstanden, ein Schulterblick (einfach, in eine Richtung oder doppelt in zwei entgegengesetzte Richtungen), ein Blick in den Seitenspiegel (ebenfalls einfach, in einen Seitenspiegel oder doppelt in beide Seitenspiegel), ein Blick in den Rückspiegel.

Vorteilhaft kann hierdurch eine Fehlklassifizierung von Fahrerbewegungen vermieden werden. Das heißt, das Verfahren ermöglicht bspw. die Vermeidung von falschen Klassifizierungen von Bewegungen, welche tatsächlich die Fahreraufmerksamkeit belegen, aber bei bisherigen Algorithmen ohne eine Anwendung des erfindungsgemäßen Verfahrens als Bewegungen erkannt werden, die eine Ablenkung darstellen. Dadurch ermöglicht das Verfahren eine Optimierung der Ermittlung der Fahreraufmerksamkeit. Es ergibt sich dabei eine Verbesserung der Zuverlässigkeit des Gesamtsystems zur Ermittlung der Fahreraufmerksamkeit. Ebenfalls erfolgt eine Steigerung der Aussagequalität des Systems zur Aufmerksamkeitserkennung.

Erfindungsgemäß ist das Verfahren dadurch gekennzeichnet, dass die Fahrerbewegung als Sicherheitsblick klassifiziert wird, wenn als Bewegungsgröße eine laterale Kopfbewegung erkannt wird.

Hierunter wird verstanden, dass die genannte definierte Bedingung eine laterale Kopfbewegung ist. Eine laterale Kopfbewegung ist eine Kopfbewegung ausgehend von einer Ausgangsposition zu einer Seite. Die Ausgangsposition kann insbesondere eine geeignete Orientierung für eine Blickrichtung in Fahrtrichtung nach vorne oder alternativ in Richtung der Region of Interest. In diesem Sinne kann eine laterale Kopfbewegung als Kopfdrehung in eine Richtung angesehen werden. Vorteilhaft erweist sich hierbei die einfache Erkennung einer lateralen Kopfbewegung. Darüber erhält man dadurch bereits eine akzeptable Validität bzgl. der Erkennung von Sicherheitsblicken und Ermittlung der Fahreraufmerksamkeit.

Erfindungsgemäß ist das Verfahren dadurch gekennzeichnet, dass eine laterale Kopfbewegung erkannt wird, wenn ausgehend von einer ersten Kopfausrichtung ein Beginn einer Kopfdrehung in eine erste Richtung ermittelt wird, wobei insbesondere ein Beginn einer Kopfdrehung in die erste Richtung ermittelt wird, wenn eine Geschwindigkeit der Kopfdrehung in die erste Richtung einem definierten ersten Geschwindigkeitsschwellenwert entspricht oder einen definierten ersten Geschwindigkeitsschwellenwert überschreitet.

Hierunter wird verstanden, dass das Verfahren den Beginn der Kopfdrehung ermittelt und auf eine laterale Kopfbewegung schließt, wenn ein Beginn einer Kopfdrehung erkannt wird. Hierzu wird die Geschwindigkeit der Kopfbewegung ermittelt und untersucht. Die Bewegungsgeschwindigkeit des Kopfes stellt dabei die Bewegungsgröße dar, die einer definierten Bedingung entsprechen muss. Es wurde überraschenderweise erkannt, dass bei einer Geschwindigkeit von 50°/Sekunde von einem Beginn der Kopfdrehung ausgegangen werden kann. Weiterhin wurde herausgefunden, dass eine Kopfdrehung nicht mit wesentlich niedrigeren Geschwindigkeiten erfolgt. Der definierte erste Geschwindigkeitsschwellenwert kann daher vorteilhaft in der Größenordnung von 50°/Sekunde definiert werden. Dieser Geschwindigkeitsschwellenwert ist dabei als Betrag zu verstehen. Bspw. kann dieser für eine Kopfdrehung nach links mit +50°/s sowie für eine Kopfdrehung nach rechts mit -50°/s angesetzt werden. Hierbei werden die Vorzeichen vorteilhaft betrachtet, um zu erkennen in welche Richtung die Kopfdrehung erfolgt. Weiterhin kann dadurch in einem späteren Schritt überprüft werden, ob sowohl eine Kopfdrehung in eine Richtung als auch eine Kopfdrehung in eine andere Richtung erfolgt ist und jeweils den entsprechenden Bedingungen genügt. Die Bedingungen zur Erkennung einer lateralen Kopfbewegung sind vorteilhaft für beide Richtungen dieselben (mit Ausnahme der unterschiedlichen Vorzeichen). Diese können jedoch auch verschieden sein. Bspw. können diese unterschiedlich sein für die erste erkannte Drehung (links oder rechts) und die zweite erkannte Drehung (rechts oder links). Vorteilhaft erweist sich dabei die einfache Ermittlung der Geschwindigkeit (bspw. als Ableitung aus der Bewegung). Darüber hinaus bietet der Ansatz insbesondere eine erhöhte Sicherheit bei der Identifikation von Sicherheitsblicken. Die erste Kopfausrichtung ist insbesondere als Ausrichtung des Kopfes mit Blick in Fahrtrichtung und/oder mit Blick auf ein definiertes ROI zu verstehen.

Erfindungsgemäß ist das Verfahren dadurch gekennzeichnet, dass eine laterale Kopfbewegung erkannt wird, wenn die Geschwindigkeit der Kopfdrehung in die erste Richtung einem definierten zweiten Geschwindigkeitsschwellenwert entspricht oder einen definierten zweiten Geschwindigkeitsschwellenwert überschreitet.

Hierunter wird verstanden, dass das Verfahren auf eine laterale Kopfbewegung schließt, wenn eine Kopfdrehung mit einer zweiten Geschwindigkeit erkannt wird.

Es wurde überraschenderweise erkannt, dass laterale Kopfbewegungen zumeist die Geschwindigkeit von 90°/Sekunde erreichen. Es wurde herausgefunden, dass bei einer Messung einer Bewegungsgeschwindigkeit von 90°/Sekunde mit hoher Wahrscheinlichkeit eine laterale Kopfbewegung erfolgt. Der definierte erste Geschwindigkeitsschwellenwert kann daher vorteilhaft in der Größenordnung von 90°/Sekunde definiert werden. Vorteilhaft erweist sich dabei erneut die relativ einfache Ermittlung der Geschwindigkeit. Weiterhin erweist sich insbesondere als vorteilhaft die gute Erkennungsqualität von Kopfdrehungen mittels dieses Kriteriums.

In einer bevorzugten Ausgestaltung ist das Verfahren dadurch gekennzeichnet, dass nicht auf eine laterale Kopfbewegung erkannt wird, wenn nach dem Erreichen oder Überschreiten des ersten, bzw. zweiten Geschwindigkeitsschwellenwert die Geschwindigkeit der Kopfdrehung in die erste Richtung eine erste, bzw. zweite Geschwindigkeitsgrenze unterschreitet Hierunter ist zu verstehen, dass eine Erkennung einer lateralen Kopfbewegung verneint wird, wenn die erste (alternativ die zweite) Geschwindigkeitsschwelle erreicht oder überschritten wurde, jedoch im Anschluss vor Ablauf der Zeitgrenze eine definierte erste (alternativ: eine definierte zweite) Geschwindigkeitsgrenze unterschritten wird. In diesem Fall wird die Erkennung einer lateralen Kopfbewegung verneint und neu mit der Ermittlung begonnen. Die Bedingung endet vorteilhafterweise bei Erreichen des nächsten Analyseschrittes. Bspw. kann die Überprüfung der Unterschreitung der zweiten Geschwindigkeitsgrenze mit Start der Überprüfung des Erreichens der ersten Bewegungsschwelle enden. Vorteilhaft wird durch die Implementierung dieses weiteres Kriterium zu Ermittlung des Sicherheitsblicks die Ergebnisgüte weiter gesteigert.

Erfindungsgemäß ist das Verfahren dadurch gekennzeichnet, dass eine laterale Kopfbewegung erkannt wird, wenn ein Bewegungsumfang der Kopfdrehung in die erste Richtung einer definierten ersten Bewegungsschwelle entspricht oder eine definierte erste Bewegungsschwelle überschreitet.

Hierunter ist zu verstehen, dass der Bewegungsumfang der Kopfdrehung einer definierten Bedingung entsprechen muss, damit die Kopfbewegung als Sicherheitsblick klassifiziert wird. Als Bewegungsumfang kann dabei insbesondere der Drehwinkel der Kopfbewegung verstanden werden.

Es wurde überraschenderweise erkannt, dass bei einem Bewegungsumfang von 45° von einem Sicherheitsblick, inbesondere von einem Schulterblick, ausgegangen werden kann. Die definierte erste Bewegungsschwelle kann daher vorteilhaft in der Größenordnung von 45° definiert werden. Vorteilhaft kann durch die Verwendung dieses weiteren Kriteriums die Ergebnisgüte verbessert werden. Weiterhin ist Ermittlung des Bewegungsumfangs in einfacher Weise und mit der bestehenden Sensorik möglich.

Erfindungsgemäß ist das Verfahren dadurch gekennzeichnet, dass die Fahrerbewegung als Sicherheitsblick klassifiziert wird, wenn als Bewegungsgröße eine lateralen Kopfbewegung sowie eine mediale Kopfbewegung erkannt wird.

Hierunter wird verstanden dass eine Kopfbewegung als Sicherheitsblick angesehen wird, wenn zunächst eine laterale und anschließend eine mediale Kopfbewegung erfolgen. Eine mediale Kopfbewegung kann als eine Kopfdrehung verstanden werden, die gegenläufig zur lateralen Kopfdrehung erfolgt, d.h. eine Rückbewegung des gedrehten Kopfes in die Ausgangsposition. Die jeweiligen Richtungen sind daher entgegen gesetzt. Bspw. erfolgt eine Kopfdrehung aus Blick in Fahrtrichtung nach links als laterale Kopfbewegung um über die linke Schulter zu blicken. Im Anschluss erfolgt eine Kopfdrehung aus dieser Position nach rechts als mediale Kopfbewegung bis wieder ein Blick in Fahrtrichtung vorliegt. Vorteilhaft erweist sich hierbei, dass nicht nur die Bewegung in eine gedrehte Kopfposition überwacht wird, sondern auch die Rückbewegung in die Ausgangsposition. Hierdurch kann man Fehlinterpretationen bestimmter Bewegungen als Sicherheitsblick vermeiden, bspw. wenn ein dauerhafter Blick zur Fahrzeugseite erfolgt.

Erfindungsgemäß ist das Verfahren dadurch gekennzeichnet, dass eine mediale Kopfbewegung erkannt wird, wenn im Anschluss an eine laterale Kopfbewegung ein Beginn einer Kopfdrehung in eine zweite Richtung ermittelt wird, wobei ein Beginn einer Kopfdrehung in die zweite Richtung ermittelt wird, wenn eine Geschwindigkeit der Kopfdrehung in die zweite Richtung einem definierten dritten Geschwindigkeitsschwellenwert entspricht oder einen definierten dritten Geschwindigkeitsschwellenwert überschreitet.

Dieses Merkmal ist analog zur Ermittlung des Beginns der lateralen Kopfbewegung zu verstehen, mit dem Unterschied, dass nunmehr zuerst die Überprüfung der lateralen Kopfbewegung und im Anschluss die Überprüfung des Beginns der medialen Kopfbewegung erfolgt. Der dritte Geschwindigkeitsschwellenwert zur Identifikation des Beginns der medialen Kopfbewegung liegt (wie der erste Geschwindigkeitsschwellenwert) bei 50°/Sekunden. Das Vorzeichen ist jedoch invertiert in Bezug auf den ersten Geschwindigkeitsschwellenwert, da die Bewegung des Kopfes in die andere Richtung zu erfolgen hat, um zum Ausgangspunkt zurückkehren zu können. Vorteilhaft erweist sich an diesem Verfahrensschritt, dass mittels der detaillierteren Überprüfung der medialen Kopfdrehung die Aussagequalität erhöht wird und Fehlklassifikationen reduziert werden können.

Erfindungsgemäß ist das Verfahren dadurch gekennzeichnet, dass eine mediale Kopfbewegung erkannt wird, wenn die Geschwindigkeit der Kopfdrehung einem definierten vierten Geschwindigkeitsschwellenwert entspricht oder einen definierten vierten Geschwindigkeitsschwellenwert überschreitet.

Dieses Merkmal ist analog zur Ermittlung der lateralen Kopfbewegung mittels der zweiten Bewegungsgeschwindigkeit zu verstehen. Der vierte Geschwindigkeitsschwellenwert zur Identifikation der medialen Kopfbewegung liegt (wie der zweite Geschwindigkeitsschwellenwert) bei 90°/Sekunden. Das Vorzeichen ist jedoch invertiert in Bezug auf den zweiten Geschwindigkeitsschwellenwert, da die Bewegung des Kopfes in die andere Richtung zu erfolgen hat, um zum Ausgangspunkt zurückkehren zu können. Vorteilhaft erfolgt durch die Verwendung dieses Kriteriums eine detailliertere Überprüfung des Bewegungsprofils und Anpassung der Abschätzung der vorliegenden Aufmerksamkeit. Hierdurch erhöht sich die Qualität der Erkennung eines Sicherheitsblicks.

Erfindungsgemäß ist das Verfahren dadurch gekennzeichnet, dass eine mediale Kopfbewegung erkannt wird, wenn ein Bewegungsumfang der Kopfdrehung in die zweite Richtung einer definierten zweiten Bewegungsschwelle entspricht oder eine definierte zweite Bewegungsschwelle überschreitet, oder wenn die Geschwindigkeit der Kopfdrehung in die zweite Richtung eine definierte dritte Geschwindigkeitsgrenze unterschreitet.

Das Merkmal Geschwindigkeitsgrenze ist analog zur Ermittlung der lateralen Kopfbewegung zu verstehen; mit dem Unterschied jedoch, dass ein Erreichen oder Unterschreiten der Geschwindigkeitsgrenze nicht zu einer Verneinung sondern zu einer Bestätigung der medialen Kopfbewegung führt.

Es wurde ermittelt, dass bei einem Unterschreiten von 50°/Sekunde von einem Abschluss der medialen Kopfbewegung ausgegangen werden kann. Die Geschwindigkeitsgrenze kann daher in der Größenordnung von 50°/Sekunde angesetzt werden. Alternativ wird eine Bestätigung der medialen Kopfbewegung dann erzielt, wenn der Kopf seine Ausgangsposition wieder erreicht hat. Hierfür wird die Bedingung "zweite Bewegungsschwelle" definiert. Diese kann dabei einen Winkelschwellenwert darstellen, wobei insbesondere dieser Winkelschwellenwert, dem Winkelschwellenwert der lateralen Bewegung entspricht. Alternativ kann als Bedingung auch ein "Nulldurchgang" (Zerocrossing) in Bezug auf die ursprüngliche Kopfausrichtung oder die erforderliche Kopfausrichtung hinsichtlich des ROI definiert werden. Vorteilhaft kann durch diese Bedingung ein Abschluss der medialen Kopfbewegung ermittelt werden. Dies führt zu einer detaillierteren Überprüfung des Bewegungsprofils und Anpassung der Abschätzung der vorliegenden Aufmerksamkeit. Hierdurch wird eine erhöhte Aussagequalität hinsichtlich der erkannten Sicherheitsblicke ermöglicht.

In einer Weiterbildung ist das Verfahren dadurch gekennzeichnet, dass eine Fahrerbewegung als Sicherheitsblick klassifiziert wird, wenn als Bewegungsgröße eine laterale Kopfbewegung in eine erste Richtung mit einer anschließenden medialen Kopfbewegung sowie eine laterale Kopfbewegung in eine zweite Richtung mit einer anschließenden medialen Kopfbewegung in die erste Richtung erfasst wird.

Hierunter ist zu verstehen, dass eine Fahrerbewegung dann als Sicherheitsblick erkannt wird, wenn bspw. zunächst eine Kopfdrehung zur linken Fahrzeugseite und dann eine Kopfdrehung zur rechten Fahrzeugseite, jeweils mit einer Rückkehr der Kopforientierung in die Ausgangsposition erfolgt. Alternativ natürlich in anderer Reihenfolge. Als Sicherheitsblick wird dadurch ein zweifacher Blick des Fahrers, bspw. über die linke und rechte Schulter oder in den linken und rechten Außenspiegel ermittelt. Die Ermittlung der zweiten lateralen und/oder medialen Kopfbewegung kann analog zu den Verfahrensschritten und Bedingungen erfolgen, wie die Ermittlung der ersten lateralen und/oder medialen Kopfbewegung. Hierbei sei darauf verwiesen, dass entsprechend ggf. der Vorzeichenwechsel bei Geschwindigkeiten und Bewegungen berücksichtigt werden muss. Hierdurch werden vorteilhaft weitere Bewegungsmuster als Sicherheitsblick erkannt und damit eine erhöhte Güte bei der Ermittlung der Aufmerksamkeit erzielt.

Insbesondere weist das Verfahren nach einem der vorhergehenden Ansprüche in vorteilhafter Weise wenigstens einen der folgenden Schritte auf: Datenermittlung, Vorverarbeitung der Daten, Analyse vorverarbeiteter Daten.

In einer bevorzugten Weiterbildung ist das Verfahren dadurch gekennzeichnet, dass die Fahrerbewegung als Sicherheitsblick klassifiziert wird, wenn die Bewegungsgröße innerhalb einer definierten Zeitgrenze der definierten Bedingung entspricht.

Hierunter ist zu verstehen, dass die beschriebenen Bedingungen jeweils innerhalb einer bestimmten Zeitspanne erfüllt werden müssen. Erfolgt keine Erfüllung innerhalb der definierten Zeit, wird davon ausgegangen, dass die Fahrerbewegung kein Sicherheitsblick ist. Solange die definierte Zeit (oder sonstige Restriktionen) noch nicht abgelaufen sind, wird weiterhin überprüft, ob die jeweilige Bedingung erfüllt wird. Hierbei kann für die Bedingungen der unterschiedlichen Verfahrensschritte jeweils eine unterschiedliche (oder natürlich die gleiche) Zeitgrenze definiert werden. Insbesondere ist jedoch vorgesehen, dass lediglich eine Zeitgrenze für alle Verfahrensschritte vorgesehen ist. Hierbei wurde identifiziert, dass ein (einfacher) Sicherheitsblick im Regelfall 2 Sekunden nicht überschreitet. Daher kann vorteilhaft die Zeitgrenze in der Größenordnung von 2 Sekunden definiert werden. Das heißt, dass die Fahrerbewegung als einfacher Sicherheitsblick klassifiziert wird, wenn alle erforderlichen Bedingungen innerhalb von 2 Sekunden erfüllt werden. Bei der Ermittlung eines doppelten Sicherheitsblicks können zwei Zeitgrenzen (jeweils für einen Sicherheitsblick in eine Richtung) berücksichtigt, vorteilhaft wiederum mit jeweils 2 Sekunden. Durch die Berücksichtigung der Zeitgrenze wird ein zusätzliches Kriterium eingeführt. Dies unterstützt vorteilhaft die korrekte Klassifikation von Fahrerbewegungen und optimiert die Aussagequalität.

In einer möglichen Ausgestaltung ist ein Verfahren zur Bestimmung der Aufmerksamkeit eines Fahrers vorgesehen, wobei bei einer Blickabwendung des Fahrers von einem definierten Bereich auf eine verringerte Aufmerksamkeit des Fahrers geschlossen wird. Dieses Verfahren ist dadurch gekennzeichnet, dass entsprechend einem der zuvor beschriebenen Verfahrensschritte überprüft wird, ob eine Fahrerbewegung als Sicherheitsblick zu klassifizieren ist und bei einer Klassifikation einer Fahrerbewegung als Sicherheitsblick auf eine nicht verringerte Aufmerksamkeit des Fahrers geschlossen wird und/oder diese Bewegung nicht bei der Bewertung der Aufmerksamkeit berücksichtigt wird.

Hierunter ist zu verstehen, dass die Aufmerksamkeit eines Fahrers ermittelt wird. Die Aufmerksamkeit wird häufig über die Blickrichtung des Fahrers bestimmt. Hierbei deutet eine Blickabwendung von der ROI auf eine Unaufmerksamkeit hin. Aus der Fahrerbewegung, insbesondere aus der Kopfbewegung kann auf eine Blickrichtung des Fahrers geschlossen werden. Ist diese außerhalb des ROI, wird bei aktuellen Aufmerksamkeitssystemen auf eine Unaufmerksamkeit geschlossen. Bei der vorgeschlagenen Ermittlung der Aufmerksamkeit wird jedoch nun analysiert, ob eine Fahrerbewegung als Sicherheitsblick entsprechend den beschriebenen Bedingungen angesehen werden kann. Ist dies der Fall, wird die entsprechende Fahrerbewegung nicht als Unaufmerksamkeit gewertet. Bspw. kann diese Bewegung bei der Ermittlung der Aufmerksamkeit nicht berücksichtigt werden. Vielmehr kann hingegen bspw. die Bewegung als Indikator für eine Aufmerksamkeit gewertet werden. Hierdurch ergibt sich eine Verbesserte Ermittlung der tatsächlichen Aufmerksamkeit und Vermeidung von Fehlklassifikationen. Vorteilhaft kann durch die genauere Kenntnis der tatsächlichen Aufmerksamkeit eine Adaption von Warnstrategien für den Fahrer erfolgen und bspw. unnötige Warnungen vermieden werden.

Erfindungsgemäß ist weiterhin eine Vorrichtung vorgesehen, die eingerichtet ist, das beschriebene Verfahren auszuführen.

Hierunter wird verstanden, dass ein Steuergerät und/oder eine sonstige Recheneinheit für das Kraftfahrzeug vorgesehen ist, welches ausgestaltet ist, das heißt eingerichtet ist und/oder Mittel aufweist, ein - wie zuvor beschriebenes - Verfahren durchzuführen oder zu unterstützen. Die Vorrichtung zur Klassifikation von Fahrerbewegungen zur Ermittlung der Fahreraufmerksamkeit bei der Führung eines Kraftfahrzeugs mit einer Innenraumkamera zur Aufnahme wenigstens eines Teils des Fahrers, ist bspw. dadurch gekennzeichnet, dass basierend auf der Aufnahme eine, eine Kopfbewegung des Fahrers repräsentierende, Bewegungsgröße auswertbar ist, und eine Fahrerbewegung als ein Sicherheitsblick klassifizierbar ist, wenn die Bewegungsgröße einer definierten Bedingung entspricht.

Erfindungsgemäß ist weiterhin ein Computerprogramm vorgesehen, das dazu eingerichtet ist, das beschriebene Verfahren auszuführen.

### Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

Von den Figuren zeigt:
Fig. 1 eine schematische Darstellung der Vorrichtungen zur Anwendung des Verfahrens in einem Kraftfahrzeug gemäß einer möglichen Ausgestaltung; und
Fig. 2 ein Prozessdiagramm des Verfahrens gemäß einer möglichen Ausgestaltung, und
Fig. 3 einen Verlauf einer Kopfbewegung über die Zeit bei einem Sicherheitsblick gemäß einer möglichen Ausgestaltung.

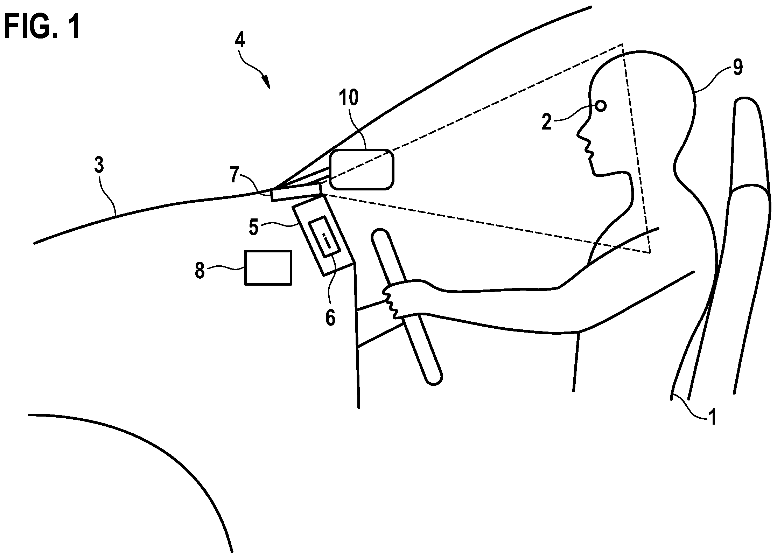

Fig. 1 zeigt eine schematische Darstellung einer beispielhaften Vorrichtung zur Anwendung des Verfahrens in einem Kraftfahrzeug. Hierbei ist ein Fahrer 1 in einem Kraftfahrzeug 3 gezeigt. Das Fahrzeug 3 weist ein Fahrerassistenzsystem 4 zur Ermittlung der Aufmerksamkeit des Fahrers 1 auf. Hierfür werden mittels einer Innenraumsensorik 7 Aufmerksamkeitsmerkmale beobachtet. In der dargestellten Ausführung wird mittels einer als Kamera ausgestalteten Innenraumsensorik 7 die Blickrichtung der Augen 2 des Fahrers 1 beobachtet. Ebenfalls werden Bewegungen des Kopfes 9 des Fahrers 1, insbesondere Sicherheitsblicke überwachte. Als Sicherheitsblicke können Schulterblicke oder Blicke in den oder die Seitenspiegel 10 verstanden werden. Weiterhin ist ein Regel- und Steuergerät 8 vorgesehen zur Durchführung des Verfahrens. Dieses kann auch dazu eingerichtet sein, die mittels der Innenraumsensorik 7 ermittelten Daten vorzuverarbeiten und/oder eine Parameterberechnung durchzuführen. Weiterhin ist eine Vorrichtung 5 zur Ausgabe von Informationen 6 an den Fahrer 1 vorgesehen. Diese Vorrichtung 5 ist als Display ausgestaltet, das visuelle Warnhinweise als Informationen 6 an den Fahrer bei mangelnder Aufmerksamkeit ausgibt. Selbstverständlich sind auch Vorrichtungen (bspw. Lautsprecher) die eine auditive Übermittlung (bspw. über Lautsprecher) oder haptische Übertragung (bspw. mittels Lenkrad- oder Sitzvibrationen) von Informationen 6 an den Fahrer 1 ermöglichen.

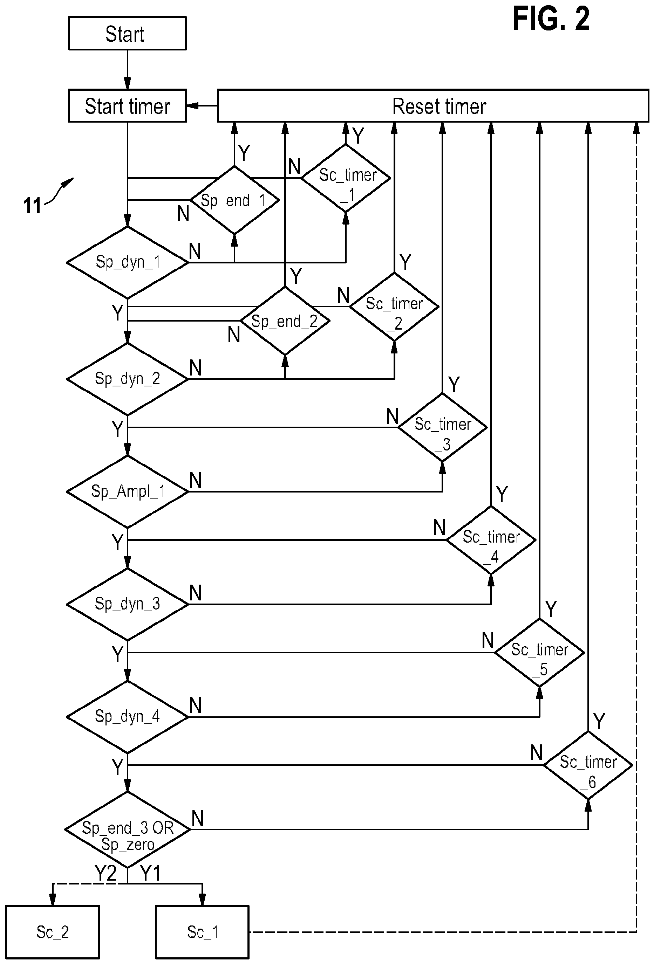

Figur 2 zeigt ein Prozessdiagramm des Verfahrens 11 gemäß einer möglichen Ausgestaltung. Das Verfahren 11 startet in einem ersten Schritt "Start". Im Anschluss wird eine Zeiterfassung gestartet "Start_timer". Im Anschluss wird überprüft, ob eine erste Geschwindigkeitsschwelle "Sp_dyn_1" erreicht oder überschritten ist. Diese erste Geschwindigkeitsschwelle "Sp_dyn_1" stellt einen Startpunkt einer lateralen Kopfbewegung in eine erste Richtung dar. Sie liegt bei etwa 50°/Sekunde in diese erste Richtung. Ist die erste Geschwindigkeitsschwelle "Sp_dyn_1" nicht erreicht "N", wird überprüft, ob eine erste Geschwindigkeitsgrenze "Sp_end_1" unterschritten ist. Weiterhin wird überprüft, ob eine erste Zeitgrenze "Sc_timer_1" überschritten ist. Ist die definierte erste Geschwindigkeitsschwelle "Sp_dyn_1" unterschritten worden "Y", wird die Zeiterfassung gestoppt und auf "Null" gesetzt "Reset_timer". Im Anschluss wird das Verfahren neu begonnen und die Zeiterfassung erneut gestartet "Start_timer". Das gleiche Vorgehen erfolgt, wenn die erste Zeitgrenze "Sc_timer_1" überschritten wurde "Y". Dabei erfolgt ein Stopp und Neuanfang bereits wenn eine der beiden Bedingungen erfüllt wird. Ist sowohl die erste Zeitgrenze "Sc_timer_1" noch nicht überschritten "N" als auch die erste Geschwindigkeitsgrenze "Sp_end_1" nicht unterschritten "N", wird weiter überprüft, ob die erste Geschwindigkeitsschwelle "Sp_dyn_1" im nächsten Messschritt erreicht wird.

Ist die erste Geschwindigkeitsschwelle "Sp_dyn_1" erreicht "Y", wird weiterhin überprüft, ob eine zweite Geschwindigkeitsschwelle "Sp_dyn_2" erreicht ist. Diese zweite Geschwindigkeitsschwelle "Sp_dyn_2" stellt eine Referenzgeschwindigkeit einer lateralen Kopfbewegung in eine erste Richtung dar. Sie liegt bei etwa 90°/Sekunde. Ist die zweite Geschwindigkeitsschwelle "Sp_dyn_2" nicht erreicht "N", wird überprüft, ob eine zweite Geschwindigkeitsgrenze "Sp_end_2" unterschritten ist. Weiterhin wird überprüft, ob eine zweite Zeitgrenze "Sc_timer_2" überschritten ist. Ist die definierte zweite Geschwindigkeitsschwelle "Sp_dyn_2" unterschritten worden "Y", wird die Zeiterfassung gestoppt und auf "Null" gesetzt "Reset_timer". Im Anschluss wird das Verfahren neu begonnen und die Zeiterfassung erneut gestartet "Start_timer". Das gleiche Vorgehen erfolgt, wenn die zweite Zeitgrenze "Sc_timer_2" überschritten wurde "Y". Dabei erfolgt ein Stopp und Neuanfang bereits wenn eine der beiden Bedingungen erfüllt wird. Ist sowohl die zweite Zeitgrenze "Sc_timer_2" noch nicht überschritten "N" als auch die zweite Geschwindigkeitsgrenze "Sp_end_2" nicht unterschritten "N", wird weiter überprüft, ob die zweite Geschwindigkeitsschwelle "Sp_dyn_2" im nächsten Messschritt erreicht wird.

Ist die zweite Geschwindigkeitsschwelle "Sp_dyn_2" erreicht oder überschritten "Y", wird überprüft, ob eine erste Bewegungsschwelle "Sp_Ampl_1" erreicht ist. Diese erste Bewegungsschwelle "Sp_Ampl_1" stellt eine Referenzauslenkung einer lateralen Kopfbewegung in eine erste Richtung dar. Sie liegt bei etwa 45°. Ist die erste Bewegungsschwelle "Sp_Ampl_1" nicht erreicht "N" wird überprüft, ob eine dritte Zeitgrenze "Sc_timer_3" überschritten ist. Ist die definierte dritte Zeitgrenze "Sp_timer_3" überschritten "Y", wird die Zeiterfassung gestoppt und auf "Null" gesetzt "Reset_timer". Ist die dritte Zeitgrenze "Sc_timer_3" noch nicht überschritten "N" wird weiter überprüft, ob die erste Bewegungsschwelle "Sp_Ampl_1" im nächsten Messschritt erreicht wird.

Ist die erste Bewegungsschwelle "Sp_Ampl_1" erreicht oder überschritten "Y", wird überprüft, ob eine dritte Geschwindigkeitsschwelle "Sp_dyn_3" erreicht ist. Diese dritte Geschwindigkeitsschwelle "Sp_dyn_3" stellt einen Startpunkt einer lateralen Kopfbewegung in eine zweite Richtung dar, welche entgegengesetzt der ersten Richtung ist. "Sp_dyn_2" liegt bei etwa 50°/Sekunde in diese zweite Richtung. Ist die dritte Geschwindigkeitsschwelle "Sp_dyn_3" nicht erreicht "N" wird überprüft, ob eine vierte Zeitgrenze "Sc_timer_4" überschritten ist. Ist die definierte vierte Zeitgrenze "Sp_timer_4" überschritten "Y", wird die Zeiterfassung gestoppt und auf "Null" gesetzt "Reset_timer". Ist die vierte Zeitgrenze "Sc_timer_4" noch nicht überschritten "N" wird weiter überprüft, ob die dritte Geschwindigkeitsschwelle "Sp_dyn_3" im nächsten Messschritt erreicht wird.

Ist die dritte Geschwindigkeitsschwelle "Sp_dyn_3" erreicht oder überschritten "Y", wird überprüft, ob eine vierte Geschwindigkeitsschwelle "Sp_dyn_4" erreicht ist. Diese vierte Geschwindigkeitsschwelle "Sp_dyn_4" stellt einen Referenzwert einer lateralen Kopfbewegung in eine zweite Richtung dar, welche entgegengesetzt der ersten Richtung ist. "Sp_dyn_4" liegt bei etwa 90°/Sekunde in diese zweite Richtung. Ist die vierte Geschwindigkeitsschwelle "Sp_dyn_4" nicht erreicht "N" wird überprüft, ob eine fünfte Zeitgrenze "Sc_timer_5" überschritten ist. Ist die definierte fünfte Zeitgrenze "Sp_timer_5" überschritten "Y", wird die Zeiterfassung gestoppt und auf "Null" gesetzt "Reset_timer". Ist die fünfte Zeitgrenze "Sc_timer_5" noch nicht überschritten "N" wird weiter überprüft, ob die vierte Geschwindigkeitsschwelle "Sp_dyn_4" im nächsten Messschritt erreicht wird.

Ist die vierte Geschwindigkeitsschwelle "Sp_dyn_4" erreicht oder überschritten "Y", wird überprüft, ob eine dritte Geschwindigkeitsgrenze "Sp_end_3" erreicht oder unterschritten ist oder ob eine gegenläufige Bewegungsschwelle "Sp_zero" erreicht oder überschritten ist. Diese dritte Geschwindigkeitsgrenze "Sp_end_3" stellt eine Minimalgeschwindigkeit einer medialen Kopfbewegung dar. Sie liegt bei etwa 50°/Sekunde. Diese gegenläufige Bewegungsschwelle "Sp_zero" stellt eine Referenzauslenkung einer medialen Kopfbewegung dar. Sie ist in etwa gleich groß wie die Bewegungsschwelle "Sp_Ampl_1" der lateralen Kopfbewegung. "Sp_zero" kann insbesondere auch als "Nulldurchgang" der Kopfdrehung bzgl. der Blickrichtung in Fahrtrichtung oder bzgl. der ROI definiert sein. Ist die dritte Geschwindigkeitsgrenze "Sp_end_3" nicht erreicht "N" wird überprüft, ob eine sechste Zeitgrenze "Sc_timer_6" überschritten ist. Ist die definierte sechste Zeitgrenze "Sp_timer_6" überschritten "Y", wird die Zeiterfassung gestoppt und auf "Null" gesetzt "Reset_timer". Ist die sechste Zeitgrenze "Sc_timer_6" noch nicht überschritten "N" wird weiter überprüft, ob die dritte Geschwindigkeitsgrenze "Sp_end_3" im nächsten Messschritt erreicht oder unterschritten ist oder ob eine gegenläufige Bewegungsschwelle "Sp_zero" im nächsten Messschritt erreicht oder überschritten wird.

Ist die dritte Geschwindigkeitsgrenze "Sp_end_3" erreicht oder unterschritten "Y1" oder ist die gegenläufige Bewegungsschwelle "Sp_zero" erreicht oder überschritten "Y1" wird angenommen, dass ein einfacher Schulterblick "Sc_1" vorliegt. Im Anschluss wird die Zeiterfassung gestoppt "Reset_timer" und neu gestartet "Start_timer". Weiterhin wird in einem zweiten Durchgang überprüft, ob ein doppelter Schulterblick "Sc_2" vorliegt. Hierbei wird das Verfahren erneut durchlaufen, wobei lediglich die Vorzeichen der Geschwindigkeiten und Bewegungen invertiert werden.

Die Zeitgrenzen "Sp_end" könne für jeden Schritt separat definiert werden. Insbesondere ist jedoch vorgesehen, dass eine Zeitgrenze für alle Schritte definiert wird. Diese Zeiterfassung beginnt dabei mit dem Schritt "Start_timer" und läuft bis zum Ende des Verfahrens, bzw. bis zum Schritt "Reset_timer".

Die Geschwindigkeitsgrenzen "Sp_dyn" können für eine erste laterale und mediale Kopfbewegung separat zur zweiten lateralen und medialen Kopfbewegung definiert werden. Insbesondere ist jedoch vorgesehen, dass die Geschwindigkeitsgrenzen für beide Bewegungen gleich sind.

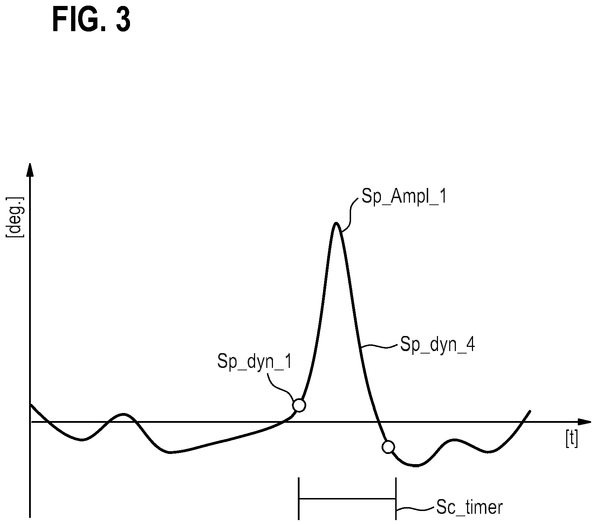

Figur 3 zeigt einen Verlauf einer Kopfbewegung über die Zeit bei einem Sicherheitsblick gemäß einer möglichen Ausgestaltung der Erfindung. Hierbei zeigt die dargestellte Linie den Kopfdrehwinkel [deg.] über die Zeit [t]. Weiterhin sind die Punkte erste Geschwindigkeitsschwelle "Sp_dyn_1", erste Bewegungsschwelle "Sp_Ampl_1", vierte Geschwindigkeitsschwelle "Sp_dyn_4 eingezeichnet. Ebenfalls ist die Zeitgrenze "Sc_timer" ausgehend von der ersten Geschwindigkeitsschwelle "Sp_dyn_1" dargestellt.

## Patentansprüche

1. Verfahren (11) zur Klassifikation von Fahrerbewegungen zur Ermittlung der Fahreraufmerksamkeit bei der Führung eines Kraftfahrzeugs (3) mit einer Innenraumkamera (7) zur Aufnahme wenigstens eines Teils des Fahrers (1), **wobei** basierend auf der Aufnahme eine, eine Kopfbewegung des Fahrers (1) repräsentierende, Bewegungsgröße ausgewertet wird, und eine Fahrerbewegung als ein Sicherheitsblick klassifiziert wird, wenn die Bewegungsgröße einer definierten Bedingung entspricht,
**dadurch gekennzeichnet, dass**
die Fahrerbewegung als Sicherheitsblick klassifiziert wird, wenn als Bewegungsgröße eine laterale Kopfbewegung sowie eine mediale Kopfbewegung erkannt wird,
wobei die laterale Kopfbewegung erkannt wird,
- wenn ausgehend von einer ersten Kopfausrichtung ein Beginn einer Kopfdrehung in eine erste Richtung ermittelt wird, wobei der Beginn der Kopfdrehung in die erste Richtung ermittelt wird, wenn eine Geschwindigkeit der Kopfdrehung in die erste Richtung einem definierten ersten Geschwindigkeitsschwellenwert (Sp_dyn_1) entspricht oder den definierten ersten Geschwindigkeitsschwellenwert (Sp_dyn_1) überschreitet,
- wenn nach Erreichen des ersten Geschwindigkeitsschwellenwerts (Sp_dyn_1) die Geschwindigkeit der Kopfdrehung in die erste Richtung einem definierten zweiten Geschwindigkeitsschwellenwert (Sp_dyn_2) entspricht oder den definierten zweiten Geschwindigkeitsschwellenwert (Sp_dyn_2) überschreitet, und
- wenn nach Erreichen oder Überschreiten des zweiten Geschwindigkeitsschwellenwerts (Sp_dyn_2) ein Bewegungsumfang der Kopfdrehung in die erste Richtung einer definierten ersten Bewegungsschwelle (Sp_Ampl_1) entspricht oder die definierte erste Bewegungsschwelle (Sp_Ampl_1) überschreitet;
wobei die mediale Kopfbewegung erkannt wird,
- wenn im Anschluss an die laterale Kopfbewegung ein Beginn einer Kopfdrehung in eine zweite Richtung ermittelt wird, wobei der Beginn der Kopfdrehung in die zweite Richtung ermittelt wird, wenn eine Geschwindigkeit der Kopfdrehung in die zweite Richtung einem definierten dritten Geschwindigkeitsschwellenwert (Sp_dyn_3) entspricht oder den definierten dritten Geschwindigkeitsschwellenwert (Sp_dyn_3) überschreitet,
- wenn die Geschwindigkeit der Kopfdrehung in die zweite Richtung nach Erreichen oder Überschreiten des dritten Geschwindigkeitsschwellenwerts (Sp_dyn_3) einem definierten vierten Geschwindigkeitsschwellenwert (Sp_dyn_4) entspricht oder den definierten vierten Geschwindigkeitsschwellenwert (Sp_dyn_4) überschreitet, und
- wenn nach Erreichen oder Überschreiten des vierten Geschwindigkeitsschwellenwerts (Sp_dyn_4) ein Bewegungsumfang der Kopfdrehung in die zweite Richtung einer definierten zweiten Bewegungsschwelle (Sp_zero) entspricht oder die definierte zweite Bewegungsschwelle (Sp_zero) überschreitet, oder wenn die Geschwindigkeit der Kopfdrehung in die zweite Richtung eine definierte dritte Geschwindigkeitsgrenze (Sp_end_3) unterschreitet.

2. Verfahren (11) nach Anspruch 1, **dadurch gekennzeichnet, dass** der erste Geschwindigkeitsschwellenwert (Sp_dyn_1) einer Geschwindigkeit von 50°/Sekunde und der zweite Geschwindigkeitsschwellenwert (Sp_dyn_2) einer Geschwindigkeit von 90°/Sekunde entspricht.

3. Verfahren (11) nach einem der vorhergehenden Ansprüche, **dadurch gekennzeichnet, dass** nicht auf eine laterale Kopfbewegung erkannt wird, wenn nach dem Erreichen oder Überschreiten des ersten, bzw. zweiten Geschwindigkeitsschwellenwert (Sp_dyn_1, Sp_dyn_2) die Geschwindigkeit der Kopfdrehung in die erste Richtung die erste oder die zweite Geschwindigkeitsgrenze (Sp_end_1, Sp_end_2) unterschreitet.

4. Verfahren (11) nach einem der vorhergehenden Ansprüche, **dadurch gekennzeichnet, dass** die Fahrerbewegung als Sicherheitsblick klassifiziert wird, wenn als die Bewegungsgröße die laterale Kopfbewegung in die erste Richtung mit der anschließenden medialen Kopfbewegung sowie eine laterale Kopfbewegung in eine zweite Richtung mit einer anschließenden medialen Kopfbewegung in die erste Richtung erfasst wird.

5. Verfahren (11) nach einem der vorhergehenden Ansprüche, **dadurch gekennzeichnet, dass** die Fahrerbewegung als Sicherheitsblick klassifiziert wird, wenn die Bewegungsgröße innerhalb einer definierten Zeitgrenze (Sc_timer) der definierten Bedingung entspricht.

6. Verfahren zur Bestimmung der Aufmerksamkeit eines Fahrers, wobei bei einer Blickabwendung des Fahrers (1) von einem definierten Bereich auf eine verringerte Aufmerksamkeit des Fahrers (1) geschlossen wird, **dadurch gekennzeichnet, dass** entsprechend einem Verfahren (11) gemäß einem der vorangegangenen Ansprüche überprüft wird, ob eine Fahrerbewegung als Sicherheitsblick zu klassifizieren ist und bei einer Klassifikation einer Fahrerbewegung als Sicherheitsblick auf eine nicht verringerte Aufmerksamkeit des Fahrers (1) geschlossen wird und/oder diese Bewegung nicht bei der Bewertung der Aufmerksamkeit berücksichtigt wird.

7. Vorrichtung (7, 8), die eingerichtet ist, das Verfahren gemäß einem der Ansprüche 1 bis 6 auszuführen.

8. Computerprogramm, das dazu eingerichtet ist, das Verfahren gemäß einem der Ansprüche 1 bis6 auszuführen.

## Claims

1. Method (11) for classifying driver movements in order to determine the driver alertness when driving a motor vehicle (3) with a passenger compartment camera (7) for recording at least one part of the driver (1), a movement variable which represents a head movement of the driver (1) being evaluated based on the recording, and a driver movement being classified as a visual safety check if the movement variable corresponds to a defined condition, **characterized in that** the driver movement is classified as a visual safety check if a lateral head movement and a medial head movement are detected as movement variable, the lateral head movement being detected
- if, starting from a first head orientation, a beginning of a head rotation in a first direction is determined, the beginning of the head rotation in the first direction being determined if the speed of the head rotation in the first direction corresponds to a defined first speed threshold value (Sp_dyn_1) or exceeds the defined first speed threshold value (Sp_dyn_1),
- if, after the first speed threshold value (Sp_dyn_1) is reached, the speed of the head rotation in the first direction corresponds to a defined second speed threshold value (Sp_dyn_2) or exceeds the defined second speed threshold value (Sp_dyn_2), and
- if, after the second speed threshold value (Sp_dyn_2) is reached or exceeded, a movement range of the head rotation in the first direction corresponds to a defined first movement threshold (Sp_Ampl_1) or exceeds the defined first movement threshold (Sp_Ampl_1);
the medial head movement being detected
- if, following the lateral head movement, a beginning of a head rotation in a second direction is determined, the beginning of the head rotation in the second direction being determined if a speed of the head rotation in the second direction corresponds to a defined third speed threshold value (Sp_dyn_3) or exceeds the defined third speed threshold value (Sp_dyn_3),
- if, after the third speed threshold value (Sp_dyn_3) is reached or exceeded, the speed of the head rotation in the second direction corresponds to a defined fourth speed threshold value (Sp_dyn_4) or exceeds a defined fourth speed threshold value (Sp_dyn_4), and
- if, after the fourth speed threshold value (Sp_dyn_4) is reached or exceeded, a movement range of the head rotation in the second direction corresponds to a defined second movement threshold (Sp_zero) or exceeds the defined second movement threshold (Sp_zero), or if the speed of the head rotation in the second direction undershoots a defined third speed limit (Sp_end_3).

2. Method (11) according to Claim 1, **characterized in that** the first speed threshold value (Sp_dyn_1) corresponds to a speed of 50°/second and the second speed threshold value (Sp_dyn_2) corresponds to a speed of 90°/second.

3. Method (11) according to either of the preceding claims, **characterized in that** a lateral head movement is not detected if, after the first or second speed threshold value (Sp_dyn_1, Sp_dyn_2) is reached or exceeded, the speed of the head rotation in the first direction undershoots the first or the second speed limit (Sp_end_1, Sp_end_2).

4. Method (11) according to one of the preceding claims, **characterized in that** the driver movement is classified as a visual safety check if the lateral head movement in the first direction with the subsequent medial head movement and the lateral head movement in a second direction with a subsequent medial head movement in the first direction are detected as the movement variable.

5. Method (11) according to one of the preceding claims, **characterized in that** the driver movement is classified as a visual safety check if the movement variable within a defined time limit (Sc_timer) corresponds to the defined condition.

6. Method for determining the alertness of a driver, a reduced alertness of the driver (1) being extrapolated in the case of the driver (1) averting their view from a defined region, **characterized in that** a check is carried out in accordance with a method (11) according to one of the preceding claims as to whether a driver movement is to be classified as a visual safety check and, in the case of a classification of a driver movement as a visual safety check, a non-reduced alertness of the driver (1) is extrapolated and/or this movement is not taken into consideration in the assessment of the alertness.

7. Apparatus (7, 8) which is configured to carry out the method according to one of Claims 1 to 6.

8. Computer program which is configured to carry out the method according to one of Claims 1 to 6.

## Revendications

1. Procédé (11) de classification de mouvements de conducteur pour déterminer l'attention du conducteur lors de la conduite d'un véhicule automobile (3) avec une caméra d'habitacle (7) pour l'enregistrement d'au moins une partie du conducteur (1), une grandeur de mouvement représentant un mouvement de tête du conducteur (1) étant évaluée sur la base de l'enregistrement, et un mouvement du conducteur étant classé comme un regard de sécurité lorsque la grandeur de mouvement correspond à une condition définie,
**caractérisé en ce que**
le mouvement du conducteur est classé comme regard de sécurité lorsqu'un mouvement de tête latéral ainsi qu'un mouvement de tête médial sont détectés en tant que grandeur de mouvement,
le mouvement de tête latéral étant détecté
- lorsqu'un début de rotation de la tête dans une première direction est déterminé à partir d'une première orientation de la tête, le début de la rotation de la tête dans la première direction étant déterminé lorsqu'une vitesse de la rotation de la tête dans la première direction correspond à une première valeur de seuil de vitesse définie (Sp_dyn_1) ou dépasse la première valeur de seuil de vitesse définie (Sp_dyn_1),
- lorsqu'après avoir atteint la première valeur de seuil de vitesse (Sp_dyn_1), la vitesse de rotation de la tête dans la première direction correspond à une deuxième valeur de seuil de vitesse définie (Sp_dyn_2) ou dépasse la deuxième valeur de seuil de vitesse définie (Sp_dyn_2), et
- lorsqu'après avoir atteint ou dépassé la deuxième valeur de seuil de vitesse (Sp_dyn_2), une amplitude de mouvement de la rotation de la tête dans la première direction correspond à un premier seuil de mouvement défini (Sp_Ampl_1) ou dépasse le premier seuil de mouvement défini (Sp_Ampl_1) ;
le mouvement de tête médial étant détecté
- lorsqu'un début de rotation de la tête dans une deuxième direction est déterminé à la suite du mouvement de tête latéral, le début de la rotation de la tête dans la deuxième direction étant déterminé lorsqu'une vitesse de la rotation de la tête dans la deuxième direction correspond à une troisième valeur de seuil de vitesse définie (Sp_dyn_3) ou dépasse la troisième valeur de seuil de vitesse définie (Sp_dyn_3),
- lorsque la vitesse de rotation de la tête dans la deuxième direction, après avoir atteint ou dépassé la troisième valeur de seuil de vitesse (Sp_dyn_3), correspond à une quatrième valeur de seuil de vitesse définie (Sp_dyn_4) ou dépasse la quatrième valeur de seuil de vitesse définie (Sp_dyn_4), et
- lorsqu'après avoir atteint ou dépassé la quatrième valeur de seuil de vitesse (Sp_dyn_4), une amplitude de mouvement de la rotation de la tête dans la deuxième direction correspond à un deuxième seuil de mouvement défini (Sp_zero) ou dépasse le deuxième seuil de mouvement défini (Sp_zero), ou lorsque la vitesse de la rotation de la tête dans la deuxième direction reste inférieure à une troisième limite de vitesse définie (Sp_end_3).

2. Procédé (11) selon la revendication 1, **caractérisé en ce que** la première valeur de seuil de vitesse (Sp_dyn_1) correspond à une vitesse de 50°/seconde et la deuxième valeur de seuil de vitesse (Sp_dyn_2) correspond à une vitesse de 90°/seconde.

3. Procédé (11) selon l'une quelconque des revendications précédentes, **caractérisé en ce qu'**un mouvement de tête latéral n'est pas détecté lorsqu'après avoir atteint ou dépassé la première ou la deuxième valeur de seuil de vitesse (Sp_dyn_1, Sp_dyn_2), la vitesse de rotation de la tête dans la première direction reste inférieure à la première ou à la deuxième limite de vitesse (Sp_end_1, Sp_end_2).

4. Procédé (11) selon l'une quelconque des revendications précédentes, **caractérisé en ce que** le mouvement du conducteur est classé comme regard de sécurité lorsque le mouvement de tête latéral dans la première direction avec le mouvement de tête médial ultérieur et un mouvement de tête latéral dans une deuxième direction avec un mouvement de tête médial ultérieur dans la première direction sont détectés en tant que grandeur de mouvement.

5. Procédé (11) selon l'une quelconque des revendications précédentes, **caractérisé en ce que** le mouvement du conducteur est classé comme regard de sécurité lorsque la grandeur de mouvement correspond à la condition définie dans le cadre d'une limite de temps définie (Sc_timer).

6. Procédé de détermination de l'attention d'un conducteur, dans lequel, lorsque le conducteur (1) détourne son regard d'une zone définie, on en conclut que l'attention du conducteur (1) est réduite, **caractérisé en ce que,** conformément à un procédé (11) selon l'une quelconque des revendications précédentes, on vérifie si un mouvement du conducteur doit être classé comme regard de sécurité et, lorsqu'un mouvement du conducteur est classé comme regard de sécurité, on en conclut que l'attention du conducteur (1) n'est pas réduite et/ou ce mouvement n'est pas pris en compte lors de l'évaluation de l'attention.

7. Dispositif (7, 8), qui est adapté pour mettre en œuvre le procédé selon l'une quelconque des revendications 1 à 6.

8. Programme informatique, qui est adapté pour mettre en œuvre le procédé selon l'une quelconque des revendications 1 à 6.
